(19) Europäisches Patentamt
European Patent Office
Office européen des brevets

(11) **EP 4 730 621 A1**

(12) **EUROPEAN PATENT APPLICATION**

(43) Date of publication:
22.04.2026 Bulletin 2026/17

(51) International Patent Classification (IPC):
*H02K 3/28* (2006.01)

(21) Application number: 25209034.5

(52) Cooperative Patent Classification (CPC):
H02K 3/28

(22) Date of filing: 16.10.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.10.2024 KR 20240143021
30.04.2025 KR 20250057064

(71) Applicant: Hyundai Mobis Co., Ltd.
Gangnam-gu
Seoul 06141 (KR)

(72) Inventor: LEE, Jae Min
16891 Yongin-si, Gyeonggi-do (KR)

(74) Representative: Jung, Minkyu
Wuesthoff & Wuesthoff
Patentanwälte und Rechtsanwalt PartG mbB
Schweigerstraße 2
81541 München (DE)

(54) **CONTINUOUS WINDING ASSEMBLY**

(57)    The present invention relates to a continuous winding assembly, and more particularly, to a continuous winding assembly for winding on a motor stator. The continuous winding assembly of the present invention is advantageous in satisfying back electromotive force and inductance balance by adopting specific pitches and shapes for windings between respective parallel circuits connected to form a series winding, while simultaneously enabling a series winding to be easily formed without a terminal assembly by allowing the respective wires to be positioned in the same phase and welded together without twisting.

FIG. 3

## Description

BACKGROUND OF THE INVENTION

Field of the Invention

The present invention relates to a continuous winding assembly, and more particularly, to a continuous winding assembly for winding on a motor stator.

Description of the Related Art

Like hairpin winding, continuous winding also requires a winding arrangement that considers inductance balance and back electromotive force phase balance, but whereas hairpin winding must be arranged with the same pitch due to the constraints of weld joints, continuous winding has the advantage of greater flexibility in arranging the pitches on both sides of the crown portion since it has no weld joints. Such flexibility, however, also has the drawback of increasing the complexity of the design. In particular, when a terminal assembly is required, continuous winding may be disadvantageous in terms of cost and quality due to increased material usage, a higher number of welds, and greater process complexity.

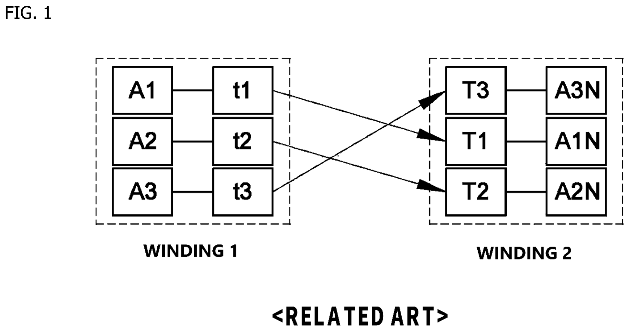

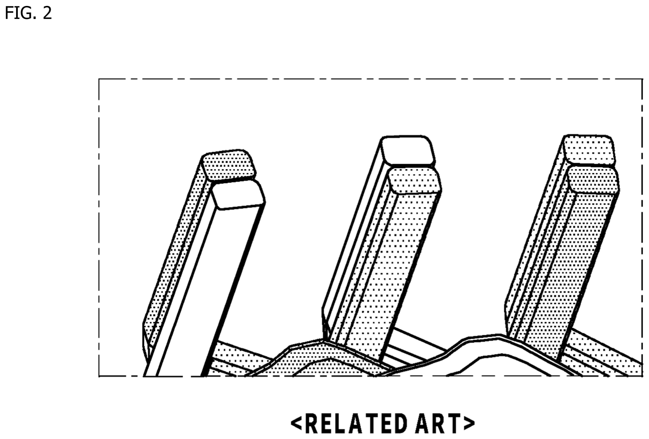

Furthermore, when continuous winding is used to connect windings between parallel circuits to form a series winding, as illustrated in FIGS. 1 and 2, cases have arisen where the connection structure of the windings between parallel circuits becomes misaligned while attempting to maintain back electromotive force and inductance balance. That is, as illustrated in FIG. 2, since windings of the same phase (the same color) must be connected to each other in the arranged state, a terminal assembly had to be used to achieve this, which presented a problem.

Documents of Related Art

(Patent Document 1) U.S. Patent No. 7,269,888, "Method of making cascaded multilayer stator winding with interleaved transitions"

SUMMARY OF THE INVENTION

The present invention has been conceived to solve the above problems, and it is an object of the present invention to provide a continuous winding assembly in which windings between parallel circuits, connected to form a series winding, adopt a specific pitch and shape to satisfy back electromotive force and inductance balance, while allowing the respective wires to be positioned in the same phase and welded together without twisting, thereby enabling a series winding to be easily formed without a terminal assembly.

In order to accomplish the above objects, a continuous winding assembly applied to a stator including one predetermined slot group per pole of a rotor, each slot group being adjacent to and consecutively positioned relative to one pole of the rotor, according to an embodiment of the present invention includes a first winding portion extending along a circumferential direction of the stator and including a plurality of windings disposed in parallel, each winding being wound in one slot included in the slot group, and a second winding portion electrically connected to the first winding portion, extending along the circumferential direction of the stator, and including a plurality of windings disposed in parallel, each winding being wound in one slot included in the slot group, wherein each winding of the first winding portion and each winding of the second winding portion are connected one-to-one and are connected by direct contact.

In addition, a terminal of the second winding portion is inserted into a slot group adjacent to the slot group into which the terminal of the corresponding winding of the first winding portion is inserted, and in the circumferential direction, the terminal of the second winding portion is inserted in reverse order relative to the arrangement of the corresponding terminal of the first winding portion.

In addition, each winding included in the first winding portion or the second winding portion includes a plurality of slot insertion portions inserted into the slots and extending in the axial direction of the motor, a jump portion provided between the plurality of slot insertion portions and extending by a predetermined pitch, and at least two single-layer parts wound in one of the layers, wherein each the single-layer parts include one slot insertion portion per slot group adjacent to each pole of the rotor, and at least one layer jump part extending across two or more layers is provided between two or more single-layer parts.

In addition, the jump portions included in the first winding portion and the second winding portion are formed with a standard pitch.

In addition the layer jump parts included in the first winding portion and the second winding portion have a pitch selected from 8, 9, or 10 pitches.

In addition, the total number of layers in which the first winding portion and the second winding portion are wound is a multiple of three.

In addition, the number N1 of layer jump parts included in each parallel winding of the first winding portion and the number N2 of layer jump parts included in each parallel winding of the second winding portion follow the following equation:

$$\text{Equation: } N1 = p(k-1), \; N2 = q(m-k-1),$$

where N1 is the number of layer jump parts of a winding in the first winding portion, N2 is the number of layer jump parts of a winding in the second winding portion, p and q are constants (integers of 1 or greater), m is the total number of layers (a multiple of three), and k is the number of odd-numbered layers in the radial direction.

In addition, when the total number of poles of the motor is S, the layer jump part is formed between a slot insertion portion in which each winding is wound for the $nS^{th}$ time and a slot insertion portion in which the winding is wound for the $(nS+1)^{th}$ time (n being a natural number).

In addition, the single-layer parts of the first winding portion are wound in odd-numbered layers in the radial direction, and the single-layer parts of the second winding portion are wound in even-numbered layers in the radial direction.

In addition, the layer jump parts of the first winding portion and the second winding portion extend across either odd-numbered or even-numbered layers in the radial direction.

BRIEF DESCRIPTION OF THE DRAWINGS

FIG. 1 is a schematic diagram illustrating the winding configuration and its connection relationship of the prior art;

FIG. 2 is a partial perspective view illustrating the coupling relationship between windings of the prior art.;

FIG. 3 is a schematic diagram illustrating the winding configuration and its connection relationship of the present invention;

FIG. 4 is a partial plan view illustrating the layers of the winding of the present invention;

FIG. 5 is a schematic diagram illustrating the arrangement of the first winding of the present invention;

FIG. 6 is a schematic diagram illustrating a layer jump part crossing the first layer and third layer of the first winding portion of the present invention;

FIG. 7 is a schematic diagram illustrating a layer jump part crossing the third layer and fifth layer of the first winding portion of the present invention;

FIG. 8 is a schematic diagram illustrating the arrangement of the second winding of the present invention;

FIG. 9 is a schematic diagram illustrating a layer jump part crossing the second layer and fourth layer of the second winding portion of the present invention;

FIG. 10 is a schematic diagram illustrating a layer jump part crossing the fourth layer and sixth layer of the second winding portion of the present invention; and

FIG. 11 is a partial perspective view illustrating the coupling relationship between the first winding and the second winding of the present invention.

DETAILED DESCRIPTION OF THE INVENTION

In the following, the technical aspects of the present invention will be described in more detail with reference to the accompanying drawings. Prior to this, the terms and words used in the following specification and claims should not be construed in a limited sense to their usual or dictionary meanings but should be interpreted according to the meanings and concepts that conform to the technical ideas of the present invention, based on the principle that the inventor can appropriately define the terms to best describe their invention.

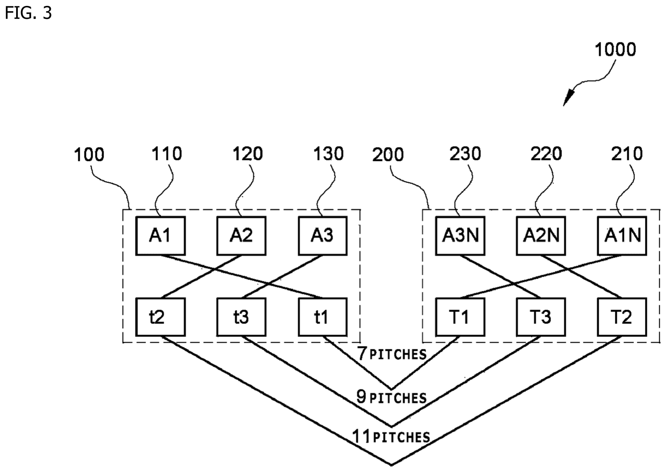

Hereinafter, a basic configuration of the continuous winding assembly 1000 of the present invention will be described with reference to FIGS. 3 to 4.

The present invention is applied to a stator including a predetermined slot group SG provided at continuous positions adjacent to a single pole of a rotor, with one slot group provided for each pole of the rotor, and as illustrated in FIG. 3, the continuous winding assembly 1000 of the present invention may include a first winding portion 100 and a second winding portion 200. More specifically, the first winding portion 100 may extend along the circumferential direction of the stator and include a plurality of windings, each inserted into and wound around a slot included in the slot group SG. The second winding portion 200 may be electrically connected to the first winding portion 100, extend along the circumferential direction of the stator, and include a plurality of windings, each inserted into and wound around a slot included in the slot group SG. Furthermore, the windings included in the first winding portion 100 or the second winding portion 200 may include a plurality of slot insertion portions 300 inserted into the slots and extending in the axial direction of the motor, and a jump portion 400 provided between the slot insertion portions 300 and extending by a predetermined pitch.

Furthermore, the terminals of the first winding portion 100 and the second winding portion 200 of the continuous winding assembly 1000 of the present invention may be wound in adjacent slots and, in the circumferential direction, may be inserted in the reverse order of the arrangement of the corresponding terminals of the first winding portion 100. That is, when the terminals of the first winding portion 100 are arranged in the order of t2, t3, and t1 from one side in the circumferential direction, the terminals of the second winding portion 200 may be arranged in the order of T1, T3, and T2 from one side in the circumferential direction (T1 corresponding to t1, T2 corresponding to t2, T3 corresponding to t3). Accordingly, each winding of the first winding portion 100 and each winding of the second winding portion 200 may be connected to each other without crossing, thereby reducing the radial thickness of the windings.

For example, when the standard pitch is 9 and the first winding portion 100 and the second winding portion 200 each include three windings, the corresponding terminals of the first and second winding portions may be spaced apart by 7, 9, and 11 pitches, respectively. More specifically, the terminal t1 of the first winding portion 100 and the terminal T1 of the second winding portion 200 may be spaced apart by 7 pitches, the terminal t2 of the first winding portion 100 and the terminal T2 of the second winding portion 200 may be spaced apart by 9 pitches, and the terminal t3 of the first winding portion 100 and the terminal T3 of the second winding portion 200 may be spaced apart by 11 pitches.

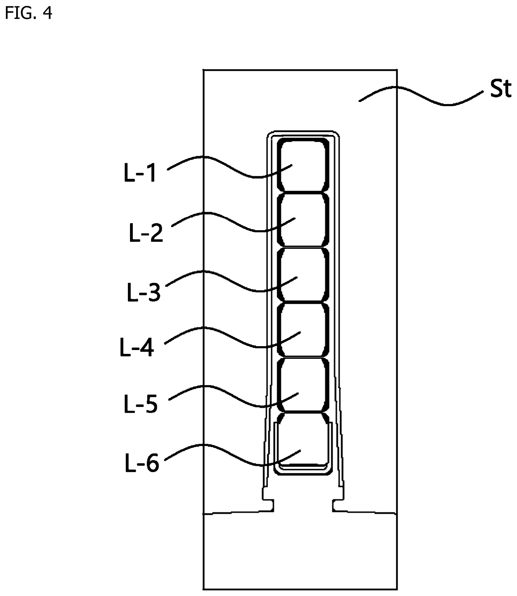

Furthermore, the layers of wires stacked in the slots may be provided in a number that is a multiple of three from the innermost side of the slot. More specifically, as illustrated in FIG. 4, six layers may be provided.

In the following description, the six layers are used as a reference, and each layer is designated as the first layer L-1, the second layer L-2, the third layer L-3, the fourth layer L-4, the fifth layer L-5, and the sixth layer L-6. In addition, the slot group SG may include three consecutive slots, including a first slot S-X provided at one edge of the slots, a second slot S-Y located at the center of the slots, and a third slot S-Z located at the other edge of the slots.

Furthermore, each winding included in the first winding portion 100 or the second winding portion 200 may include at least two single-layer parts 500, each wound in a single layer, and one single-layer part 500 may include a slot insertion portion 300 inserted into each slot group SG adjacent to all poles. Furthermore, the pitch of the jump portion 400 included in each single-layer part 500 may all be formed as the standard pitch. Accordingly, the manufacturing of each winding may be made easier. In addition, each winding may include at least one layer jump part 600 provided between two or more single-layer parts 500, crossing two or more layers. In this case, the pitch of the layer jump part 600 may be any one selected from 8 pitches, 9 pitches, or 10 pitches.

More specifically, the single-layer parts 500 of the first winding portion 100 may be wound in the odd-numbered layers in the radial direction. That is, when six layers are provided in the radial direction, the single-layer parts 500 of each parallel winding of the first winding portion 100 may be wound in the first layer L-1, the third layer L-3, and the fifth layer L-5. Furthermore, the single-layer parts 500 of the second winding portion 200 may be wound in the even-numbered layers in the radial direction. That is, when six layers are provided in the radial direction, the single-layer parts 500 of each parallel winding of the second winding portion 200 may be wound in the second layer L-2, the fourth layer L-4, and the sixth layer L-6.

In this case, the layer jump parts 600 included in the first winding portion 100 and the second winding portion 200 may be provided to pass through at least one of the odd-numbered layers or even-numbered layers, without being limited to only odd-numbered or only even-numbered layers. For example, a layer jump part 600 connecting the single-layer part 500 in the first layer L-1 and the single-layer part 500 in the third layer L-3 of the first winding portion 100 may be formed to pass through the second layer L-2 between the first layer L-1 and the third layer L-3, in addition to the first layer L-1 and the third layer L-3.

Furthermore, the number N1 of layer jump parts 600 included in each parallel winding of the first winding portion 100 may follow Equation 1.

$$\text{Equation 1: } N1 = p(k-1),$$

where N1 is the number of layer jump parts 600 of the winding in the first winding portion 100, p is a constant (an integer of 1 or greater), and k is the number of odd-numbered layers in the radial direction. That is, when p is 1, a single continuous single-layer part 500 is formed to include slot insertion portions 300 corresponding to all poles in the circumferential direction; when p is 2 or greater, a single continuous single-layer part 500 is formed to include slot insertion portions 300 corresponding to only a portion of the poles in the circumferential direction (for example, only 1/2 or 1/4 in the circumferential direction), such that the layer jump parts 600 are provided more densely.

Furthermore, the number N2 of layer jump parts 600 included in each parallel winding of the second winding portion 200 may follow the following Equation 2.

$$\text{Equation 2: } N2 = q(m-k-1),$$

where N2 is the number of layer jump parts 600 of the winding in the second winding portion 200, q is a constant (an integer of 1 or greater), m is the total number of layers (a multiple of three), and k is the number of odd-numbered layers in the radial direction. That is, when q is 1, a single continuous single-layer part 500 is formed to include slot insertion portions 300 corresponding to all poles in the circumferential direction. When q is 2 or greater, a single continuous single-layer part 500 is formed to include slot insertion portions 300 corresponding to only a portion of the poles in the circumferential direction (for example, only 1/2 or 1/4 in the circumferential direction), such that the layer jump parts 600 are provided more densely.

Furthermore, the layer jump part 600 may be formed between the slot insertion portion 300 wound at the $nS^{th}$ position and the slot insertion portion 300 wound at the $(nS + 1)^{th}$ position for each winding, where S is the total number of poles of the motor. Here, n is a natural number. More specifically, when the total number of poles of the motor is 8, the layer jump part 600 may be provided between the slot insertion portions 300 wound at positions that are multiples of 8, such as the 8th, 16th, 24th, ..., and their adjacent slot insertion portions 300, that is, the 9th, 17th, 25th, ... positions.

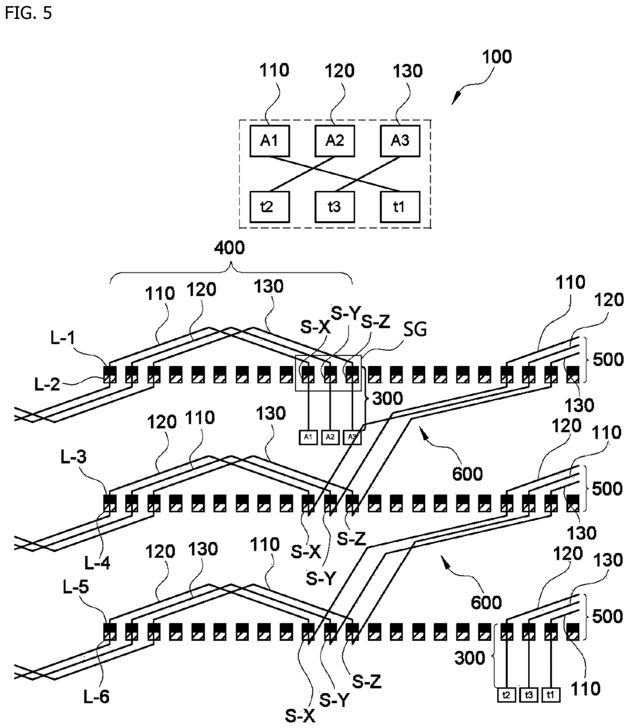

Hereinafter, the first winding portion 100 of the present invention will be described in more detail with reference to FIGS. 5 to 7.

As illustrated in FIG. 5, the first winding portion 100 may include a first wire 110, a second wire 120, and a third wire 130, which are wound in parallel. Each of the first wire 110, the second wire 120, and the third wire 130 may be wound around the stator three times along the circumferential direction and may be wound in the first layer L-1, the third layer L-3, and the fifth layer L-5, respectively. Here, the jump portions 400 within the single-layer part 500 regions of the first wire 110, the second wire 120, and the third wire 130 may all be formed with the standard pitch.

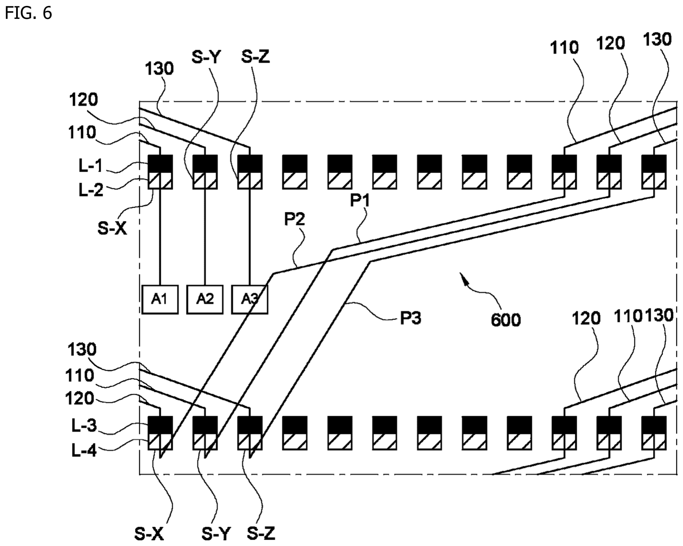

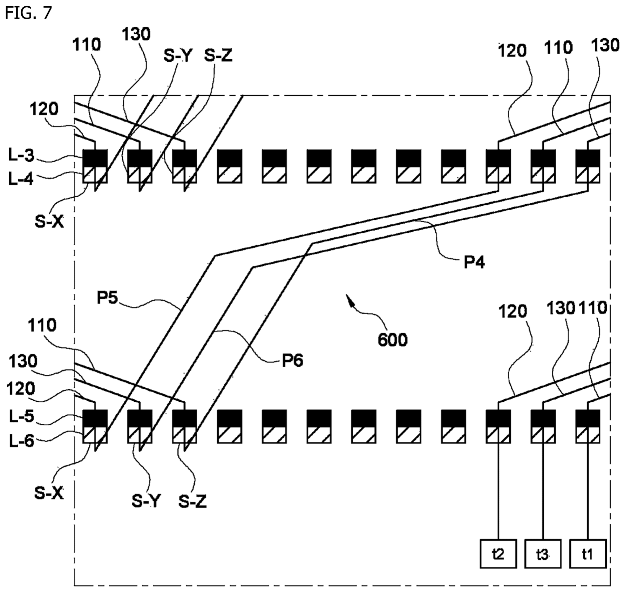

In addition, the pitch of the layer jump parts 600 of the windings included in the first winding portion 100 may be selected from 8 pitches, 9 pitches, or 10 pitches. For example, as illustrated in FIG. 6, the pitch P1 of the layer jump part 600 of the first wire 110 crossing the first layer L-1 and the third layer L-3 may be 8, the pitch P2 of the layer jump part 600 of the second wire 120 may be 10, and the pitch P3 of the layer jump part 600 of the third wire 130 may be 9. Furthermore, as illustrated in FIG. 7, the pitch P4 of the layer jump part 600 of the first wire 110 crossing the third layer L-3 and the fifth layer L-5 may be 8, the pitch P5 of the layer jump part 600 of the second wire 120 may be 9, and the pitch P6 of the layer jump part 600 of the third wire 130 may be 10.

More specifically, for the first wire 110 of the first winding portion 100, the jump portions 400 included in the single-layer parts 500 are provided with the standard pitch, the pitch of all layer jump parts 600 of the first wire 110 is 8, all slot insertion portions 300 of one end of the first wire 110 in the first layer L-1 are inserted into the first slot S-X, all slot insertion portions 300 in the third layer L-3 are inserted into the second slot S-Y, all slot insertion portions 300 in the fifth layer L-5 are inserted into the third slot S-Z, and the slot insertion portions 300 at the other end of the first wire 110 may be inserted into the Z slot.

Furthermore, for the second wire 120 of the first winding portion 100, the jump portions 400 included in the single-layer parts 500 are provided with the standard pitch, all slot insertion portions 300 at one end of the second wire 120 in the first layer L-1 are inserted into the second slot S-Y, the pitch of the layer jump part 600 between the first layer L-1 and the third layer L-3 is 10, all slot insertion portions 300 in the third layer L-3 are inserted into the first slot S-X, the pitch of the layer jump part 600 between the third layer L-3 and the fifth layer L-5 is 9, all slot insertion portions 300 in the fifth layer L-5 are inserted into the first slot S-X, and the slot insertion portions 300 at the other end of the second wire 120 may be inserted into the X slot.

Similarly, for the third wire 130 of the first winding portion 100, the jump portions 400 included in the single-layer parts 500 are provided with the standard pitch, all slot insertion portions 300 at one end of the third wire 130 in the first layer L-1 are inserted into the third slot S-Z, the pitch of the layer jump part 600 between the first layer L-1 and the third layer L-3 is 9, all slot insertion portions 300 in the third layer L-3 are inserted into the third slot S-Z, the pitch of the layer jump part 600 between the third layer L-3 and the fifth layer L-5 is 10, all slot insertion portions 300 in the fifth layer L-5 are inserted into the second slot S-Y, and the slot insertion portions 300 at the other end of the third wire 130 may be inserted into the Y slot.

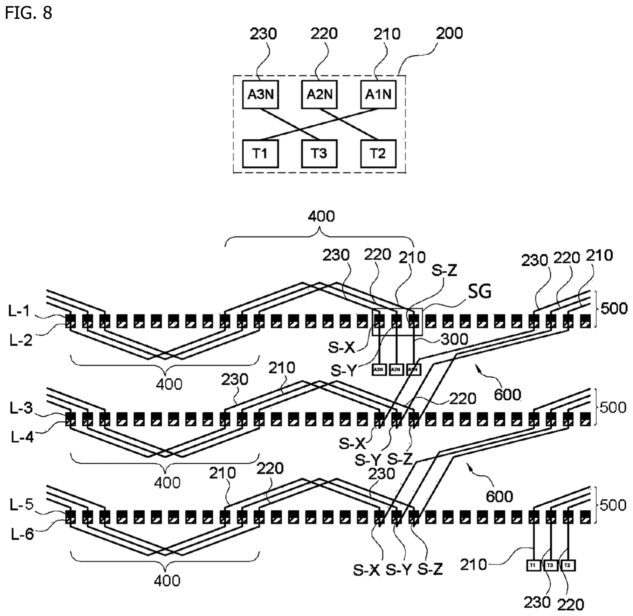

Hereinafter, the second winding portion 200 of the present invention will be described in more detail with reference to FIGS. 8 to 10.

As illustrated in FIG. 8, the second winding portion 200 may include a fourth wire 210, a fifth wire 220, and a sixth wire 230, which are wound in parallel. Each of the fourth wire 210, the fifth wire 220, and the sixth wire 230 may be wound around the stator three times along the circumferential direction and may be wound in the second layer L-2, the fourth layer L-4, and the sixth layer L-6, respectively. Here, the jump portions 400 within the single-layer part 500 regions of the fourth wire 210, the fifth wire 220, and the sixth wire 230 may all be formed with the standard pitch.

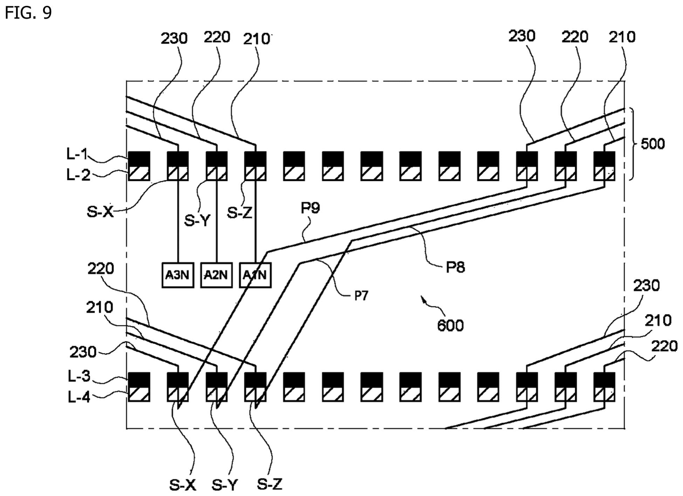

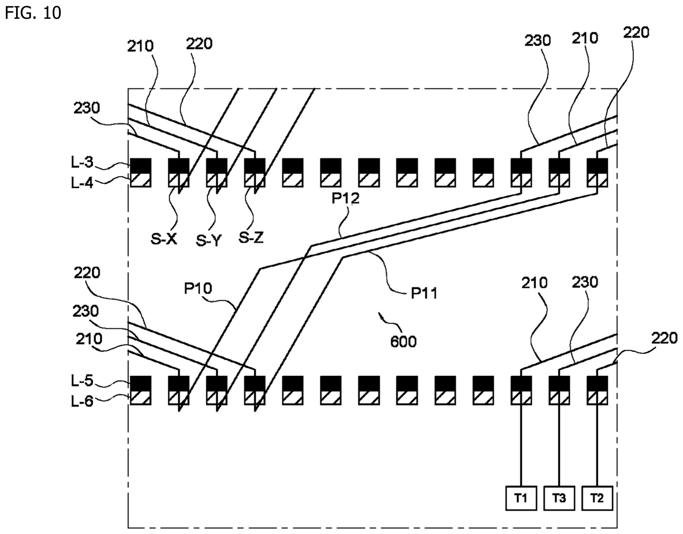

In addition, the pitch of the layer jump parts 600 of the windings included in the second winding portion 200 may be selected from 8 pitches, 9 pitches, or 10 pitches. For example, as illustrated in FIG. 9, the pitch P7 of the layer jump part 600 of the fourth wire 210 crossing the second layer L-2 and the fourth layer L-4 may be 10, the pitch P8 of the layer jump part 600 of the fifth wire 220 may be 8, and the pitch P9 of the layer jump part 600 of the sixth wire 230 may be 9. Further, as illustrated in FIG. 10, the pitch P10 of the layer jump part 600 of the fourth wire 210 crossing the fourth layer L-4 and the sixth layer L-6 may be 10, the pitch P11 of the layer jump part 600 of the fifth wire 220 may be 9, and the pitch P12 of the layer jump part 600 of the sixth wire 230 may be 8.

More specifically, for the fourth wire 210 of the second winding portion 200, the jump portions 400 included in the single-layer parts 500 are provided with the standard pitch, the pitch of all layer jump parts 600 of the fourth wire 210 is 10, all slot insertion portions 300 at one end of the fourth wire 210 in the first layer L-1 are inserted into the third slot S-Z, all slot insertion portions 300 in the third layer L-3 are inserted into the second slot S-Y, all slot insertion portions 300 in the fifth layer L-5 are inserted into the first slot S-X, and the slot insertion portions 300 at the other end of the fourth wire 210 may be inserted into the X slot.

Furthermore, for the fifth wire 220 of the second winding portion 200, the jump portions 400 included in the single-layer parts 500 are provided with the standard pitch, all slot insertion portions 300 at one end of the fifth wire 220 in the first layer L-1 are inserted into the second slot S-Y, the pitch of the layer jump part 600 between the first layer L-1 and the third layer L-3 is 8, all slot insertion portions 300 in the third layer L-3 are inserted into the third slot S-Z, the pitch of the layer jump part 600 between the third layer L-3 and the fifth layer L-5 is 9, all slot insertion portions 300 in the fifth layer L-5 are inserted into the third slot S-Z, and the slot insertion portions 300 at the other end of the fifth wire 220 may be inserted into the Z slot.

For the sixth wire 230 of the second winding portion 200, the jump portions 400 included in the single-layer parts 500 are provided with the standard pitch, all slot insertion portions 300 at one end of the sixth wire 230 in the first layer L-1 are inserted into the first slot S-X, the pitch of the layer jump part 600 between the first layer L-1 and the third layer L-3 is 9, all slot insertion portions 300 in the third layer L-3 are inserted into the first slot S-X, the pitch of the layer jump part 600 between the third layer L-3 and the fifth layer L-5 is 8, all slot insertion portions 300 in the fifth layer L-5 are inserted into the second slot S-Y, and the slot insertion portions 300 at the other end of the sixth wire 230 may be inserted into the Y slot.

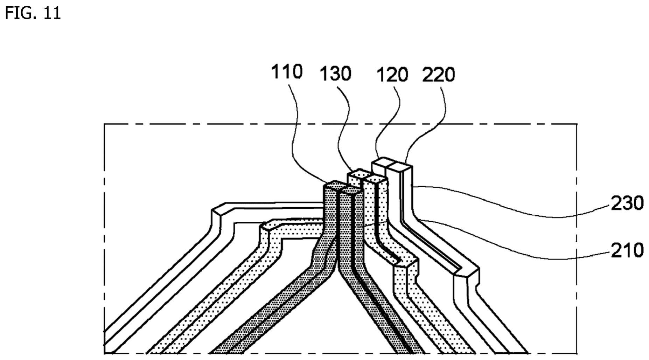

Hereinafter, the coupling relationship between the first winding portion 100 and the second winding portion 200 of the present invention will be described in more detail with reference to FIG. 11.

Analyzing the back electromotive force phase and inductance balance in the above-described arrangement of the first winding portion 100 and the second winding portion 200, it can be confirmed that the inductance phase is balanced for the first wire 110 and the fourth wire 210 connected to each other, since the first wire 110 is wound in 8 slots in each of the first layer L-1, the third layer L-3, and the fifth layer L-5, and the fourth wire 210 is wound in 8 slots in each of the second layer L-2, the fourth layer L-4, and the sixth layer L-6. It can also be confirmed that the first wire 110 is wound 8 times in the X slot S-X of the first layer L-1, 8 times in the Y slot S-Y of the third layer L-3, and 8 times in the Z slot S-Z of the fifth layer L-5, while the fourth wire 210 is wound 8 times in the Z slot S-Z of the second layer L-2, 8 times in the Y slot S-Y of the fourth layer L-4, and 8 times in the X slot S-X of the sixth layer L-6. Accordingly, it can be confirmed that the total number of windings in the X slot S-X, Y slot S-Y, and Z slot S-Z of the series-connected winding formed by the first wire 110 and the fourth wire 210 is 16 for each slot, such that the back electromotive force phase is also balanced.

It can also be confirmed that, for the second wire 120 and the fifth wire 220, the number of slots wound for the second wire 120 is 8 in each of the first layer L-1, third layer L-3, and fifth layer L-5, and the number of slots wound for the fifth wire 220 is 8 in each of the second layer L-2, fourth layer L-4, and sixth layer L-6, so that the inductance phase is balanced. It can further be confirmed that the second wire 120 is wound 8 times in the Y slot S-Y of the first layer L-1, 8 times in the X slot S-X of the third layer L-3, and 8 times in the X slot of the fifth layer L-5, while the fifth wire 220 is wound 8 times in the Y slot S-Y of the second layer L-2, 8 times in the Z slot S-Z of the fourth layer L-4, and 8 times in the Z slot of the sixth layer L-6. Accordingly, the total number of windings in the X slot S-X, Y slot S-Y, and Z slot S-Z of the series-connected winding formed by the second wire 120 and the fifth wire 220 is 16 for each slot, such that the back electromotive force phase is also balanced.

It can be confirmed that, for the third wire 130 and the sixth wire 230 connected to each other, the inductance phase is balanced since the third wire 130 is wound in 8 slots in each of the first layer L-1, third layer L-3, and fifth layer L-5, and the sixth wire 230 is wound in 8 slots in each of the second layer L-2, fourth layer L-4, and sixth layer L-6.

It can also be confirmed that the third wire 130 is wound 8 times in the Z slot S-Z of the first layer L-1, 8 times in the Z slot S-Z of the third layer L-3, and 8 times in the Y slot S-Y of the fifth layer L-5, while the sixth wire 230 is wound 8 times in the X slot S-X of the second layer L-2, 8 times in the X slot S-X of the fourth layer L-4, and 8 times in the Y slot S-Y of the sixth layer L-6. Accordingly, it can be confirmed that the total number of windings in the X slot S-X, Y slot S-Y, and Z slot S-Z of the series-connected winding formed by the third wire 130 and the sixth wire 230 is 16 for each slot, such that the back electromotive force phase is also balanced.

According to the above-described arrangement, as illustrated in FIG. 11, the other end of the first wire 110 of the first winding portion 100 and the other end of the fourth wire 210 of the second winding portion 200 may be spaced apart by 7 pitches, and the first wire 110 and the fourth wire 210 may be drawn out toward each other by half of the spacing, i.e., 3 pitches, to be coupled together. Similarly, the other end of the second wire 120 of the first winding portion 100 and the other end of the fifth wire 220 of the second winding portion 200 may be spaced apart by 11 pitches, and the second wire 120 and the fifth wire 220 may be drawn out toward each other by half of the spacing, i.e., 5 pitches, to be coupled together. Further, the other end of the third wire 130 of the first winding portion 100 and the other end of the sixth wire 230 of the second winding portion 200 may be spaced apart by 9 pitches, and the third wire 130 and the sixth wire 230 may be drawn out toward each other by half of the spacing, i.e., 4 pitches, to be coupled together. Accordingly, the drawn-out portions of each wire may be coupled without overlapping, thereby reducing the radial thickness of the winding.

The continuous winding assembly with the above configuration according to the present invention is advantageous in satisfying back electromotive force and inductance balance by adopting specific pitches and shapes for windings between respective parallel circuits connected to form a series winding, while simultaneously enabling a series winding to be easily formed without a terminal assembly by allowing the respective wires to be positioned in the same phase and welded together without twisting.

The technical concept of the present invention should not be interpreted solely based on the above-described embodiments. It should be understood that various modifications and changes are possible within the scope of the claims without departing from the essence of the invention claimed in the claims. Thus, such improvements and modifications fall within the protection scope of the present invention as long as they are obvious to those skilled in the art.

DESCRIPTION OF REFERENCE NUMERALS

1000: continuous winding assembly
100: first winding portion
110: first wire
120: second wire
130: third wire
200: second winding portion
210: fourth wire
220: fifth wire
230: sixth wire
300: slot insertion portion
400: jump portion
500: single-layer part
600: layer jump part
L-1: first layer
L-2: second layer
L-3: third layer
L-4: fourth layer
L-5: fifth layer
L-6: sixth layer
St: stator
SG: slot group
S-X: first slot
S-Y: second slot
S-Z: third slot

**Claims**

1. A continuous winding assembly applied to a stator including one predetermined slot group per pole of a rotor, each slot group being adjacent to and consecutively disposed relative to one pole of the rotor, the continuous winding assembly comprising:

   a first winding portion extending along a circumferential direction of the stator and including a plurality of first windings disposed in parallel, each first winding being wound in one slot included in the slot group; and
   a second winding portion electrically connected to the first winding portion, extending along the circumferential direction of the stator, and including a plurality of second windings disposed in parallel, each second winding being wound in one slot included in the slot group,
   wherein each first winding of the first winding portion and each second winding of the second winding portion are connected one-to-one and are connected by direct contact.

2. The continuous winding assembly of claim 1, wherein a terminal of the second winding portion is inserted into a slot group adjacent to the slot group into which the terminal of the corresponding winding of the first winding portion is inserted, and in the circumferential direction, the terminal of the second winding portion is inserted in reverse order relative to arrangement of the corresponding terminal of the first winding portion.

3. The continuous winding assembly of claim 1 or 2, wherein each winding included in the plurality of first windings of the first winding portion or in the plurality of second windings of the second winding portion comprises:

   a plurality of slot insertion portions inserted into the slots and extending in an axial direction of the motor;
   a jump portion disposed between the plurality of slot insertion portions and extending by a predetermined pitch; and
   at least two single-layer parts wound in one of a plurality of layers,
   wherein each the single-layer parts include one slot insertion portion per slot group adjacent to each pole of the rotor, and at least one layer jump part extending across two or more layers is disposed between two or more single-layer parts.

4. The continuous winding assembly of claim 3, wherein jump portions included in the first winding portion and the second winding portion are formed with a standard pitch.

5. The continuous winding assembly of claim 3 or 4, wherein the layer jump parts included in the first winding portion and the second winding portion have a pitch selected from 8, 9, or 10 pitches.

6. The continuous winding assembly of any one of claims 1 to 5, wherein a total number of layers in which the first winding portion and the second winding portion are wound is a multiple of three.

7. The continuous winding assembly of any one of claims 1 to 6, wherein a number N1 of layer jump parts included in each parallel winding of the first winding portion and a number N2 of layer jump parts included in each parallel winding of the second winding portion follow the following equation:

   Equation: $N1 = p(k-1)$, $N2 = q(m-k-1)$,

   where the N1 is the number of layer jump parts of a winding in the first winding portion, the N2 is the number of layer jump parts of a winding in the second winding portion, p and q are constants (integers of 1 or greater), m is the total number of layers (a multiple of three), and k is the number of odd-numbered layers in a radial direction.

8. The continuous winding assembly of any one of claims 3 to 7, wherein, based on that a total number of poles of the motor is S, the layer jump part is disposed between a slot insertion portion in which each winding is wound for the $nS^{th}$ time and a slot insertion portion in which the winding is wound for the $(nS+1)^{th}$ time, wherein the n is a natural number.

9. The continuous winding assembly of any one of claims 3 to 8, wherein the single-layer parts of the first winding portion are wound in odd-numbered layers in a radial direction, and the single-layer parts of the second winding portion are wound in even-numbered layers in the radial direction.

10. The continuous winding assembly of any one of claims 3 to 9, wherein the layer jump parts of the first winding portion and the second winding portion extend across either odd-numbered or even-numbered layers in the radial direction.

FIG. 1

WINDING 1          WINDING 2

<RELATED ART>

FIG. 2

<RELATED ART>

FIG. 3

FIG. 4

FIG. 5

FIG. 6

FIG. 7

FIG. 8

FIG. 9

FIG. 10

FIG. 11

Europäisches
Patentamt
European
Patent Office
Office européen
des brevets

# EUROPEAN SEARCH REPORT

**Application Number**

EP 25 20 9034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 605 989 B2 (BORGWARNER INC [US]) 14 March 2023 (2023-03-14) | 1,3-5,9, 10 | INV. H02K3/28 |
| A | * column 5, line 28 - column 10, line 16 * * column 4, line 20 - line 30 * * figures 3-10 * ----- | 2,6-8 | |

**TECHNICAL FIELDS SEARCHED (IPC)**

H02K

The present search report has been drawn up for all claims

| Place of search | Date of completion of the search | Examiner |
|---|---|---|
| Munich | 9 February 2026 | Türk, Severin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 9034

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | Publication date | Patent family member(s) | Publication date |
|---|---|---|---|
| US 11605989 B2 | 14-03-2023 | CN 114762217 A | 15-07-2022 |
| | | DE 112020005299 T5 | 18-08-2022 |
| | | US 2021159743 A1 | 27-05-2021 |
| | | WO 2021108767 A1 | 03-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7269888 B